# EUROPÄISCHE PATENTSCHRIFT

(11) **EP 1 594 625 B1**
(45) Veröffentlichungstag und Bekanntmachung des Hinweises auf die Patenterteilung: **24.05.2006**
(21) Anmeldenummer: 04710787.5
(22) Anmeldetag: 13.02.2004
(51) Int. Cl.: B05D 1/22, B05D 1/02, B05D 5/10, B01J 2/00, B29C 67/04, B22F 7/02, B05D 3/10, B29C 67/00

(54) **VERFAHREN ZUR BESCHICHTUNG VON PARTIKELN FÜR GENERATIVE RAPID PROTOTYPING PROZESSE**
METHOD FOR COATING PARTICLES FOR GENERATIVE PROTOTYPING PROCESSES
PROCEDE POUR REVETIR DES PARTICULES POUR DES METHODES DE CONCEPTION RAPIDE GENERATIVE DE PROTOTYPES

(30) Priorität: 18.02.2003 DE 10306887
(43) Veröffentlichungstag der Anmeldung: 16.11.2005
(73) Patentinhaber: DaimlerChrysler AG, 70567 Stuttgart (DE)
(72) Erfinder: PFEIFER, Rolf, 73054 Eislingen (DE); SHEN, Jialin, 89182 Bernstadt (DE)
(86) Internationale Anmeldenummer: PCT/DE2004/000258
(87) Internationale Veröffentlichungsnummer: WO 2004/073889

(56) Entgegenhaltungen:
- EP-A- 0 897 745
- EP-A- 1 163 999
- WO-A-03/106146
- US-A1- 2001 033 899

## Beschreibung

Die Erfindung betrifft ein Verfahren zur Beschichtung von Pulvermaterial mittels eines Klebemittels für generative rapid prototyping Prozesse, insbesondere dem 3D-Binderdruck, sowie die Herstellung von Körpern aus dem beschichteten Pulvermaterial mittels generativer rapid prototyping Prozesse und deren bevorzugte Verwendung in der Gießereitechnik und der Feinmechanik.

Zu den neueren und besonders interessanten pulverbasierten generativen rapid prototyping (RP) Verfahren gehört das 3D-Binderdruckverfahren.

In einer ersten Variante des 3D-Binderdrucks, wird eine Schicht aus Partikeln oder Granulaten auf eine Unterlage ausgebracht und hierauf in vorgegebenen Bereichen, die jeweils einer Schicht eines zu erzeugenden Gegenstandes entsprechen, mit einer Bindeflüssigkeit befeuchtet. Die Partikel werden in den befeuchteten Bereichen von der Binderflüssigkeit benetzt und verklebt. Durch anschließendes Verdampfen der Lösungsmittel in der Binderflüssigkeit haften die Partikel unmittelbar aneinander, wobei sie zumindest in ihren Randbereichen miteinander verschmelzen. 3D-Binderdruckverfahren, die sich insbesondere auf diesen Typ beziehen, sind beispielsweise aus den europäischen Patenten EP 0644 809 B1, EP 0686 067 B1 und der europäischen Patentanmeldung EP 1 099 534 A2 bekannt.

In einer weiteren Variante dieses Verfahrens wird eine Sinterhilfsstoffe enthaltende Binderflüssigkeit eingesetzt, die beim Trocknen der befeuchteten Bereiche Sinterhilfsstoffe zurücklässt, die eine festes Versintern der Partikel in einer folgenden Sinterbehandlung ermöglichen. Hierdurch sind harte und dichte Sinterkörper erhältlich.

Aus der EP 0 925 169 B1 ist eine weitere Variante des 3D-Binderdruckverfahrens bekannt, in der Mischungen aus Partikeln, Füllern und Klebern eingesetzt werden. Die Binderflüssigkeit wird im Wesentlichen nur noch aus einem Lösungsmittel für den in der Mischung enthaltenen Kleber gebildet. Der Kleber kann dabei auch als Beschichtung der Partikel vorliegen. Dabei sind wasserlösliche Polymere als Pulverbeschichtung und wässrige Binderflüssigkeiten bekannt. Aus der EP 1163999 A2 sind beschichtete Partikeln bekannt, aus der EP 0897745 A1 sind Beschichtungsverfahren bekannt.

Ein weiteres Verfahren des generativen rapid prototyping (RP) sieht die Verfestigung der Partikel in der Schicht mittels Licht, oder laserinduziertem Sintern, z.B. gemäß der WO 03 106146 A1 vor (im folgenden Lasersintern). Hierzu wird die Schicht in definierten Bereichen mittels Belichtung, gegebenenfalls auch durch eine Maske, oder Laserstrahlung so weit erhitzt, dass die Partikel zusammenschmelzen oder zusammensintern können.

Die bekannten Binderdruckverfahren haben den Nachteil, dass der fertige Körper gegenüber dem ursprünglich mit der Binderflüssigkeit befeuchteten Bereich eine deutliche Schrumpfung (Schwindung) aufweist. Beim Binderdruck rücken die Partikel beim Befeuchten unter Einwirkung der Kapillarkräfte und der Oberflächenspannung näher zusammen, insbesondere dann, wenn gegebenenfalls vorhandene Kleber durch die Binderflüssigkeit aufgelöst werden, so dass bereits während der Formgebung beziehungsweise nach der Trocknung zum Grünkörper eine deutliche Schwindung stattgefunden hat. Auch im Falle des laserinduzierten Sinterns tritt eine Schwindung in den ausgehärteten Bereichen auf.

Die bekannten Kleber oder klebenden Beschichtungen haben den Nachteil, dass sie hydrophil sind und daher Wasser aus der Umgebung, insbesondere aus der Luftfeuchtigkeit, aufnehmen. Dies führt allgemein zu einer unerwünschten Agglomeration der Partikel. Im Falle des 3D-Binderdrucks findet auch eine hohe Bindeflüssigkeitsaufnahme beim Drucken statt. Dies hat einen negativen Einfluss auf die Abbildungsschärfe und die Lagerfähigkeit, sowie das Handling des Pulvers. Agglomerate führen zu ungleichmäßigen Pulverschichten und Defekten in den hieraus gebildeten Körpern. Für die Herstellung homogener Körper in konstanter Qualität spielt des weiteren die Rieselfähigkeit der Pulver eine große Bedeutung.

Aufgabe der Erfindung ist es daher, ein Verfahren zur Beschichtung von Pulvermaterial anzugeben, das eine Agglomeration der Primärpartikel verhindert, zu beschichteten Partikeln verbesserter Lagerfähigkeit, Handling und Abbildeschärfe führt, das für generative RP Verfahren, insbesondere den 3D-Binderdruck geeignet ist, sowie ein 3D-Binderdruckverfahren zur schwindungsarmen Herstellung von Körpern oder Sinterkörpern aufzuzeigen.

Die Aufgabe wird gelöst durch ein Verfahren zur Beschichtung von Pulverpartikeln nach den Patentansprüchen 1 bis 9 und der Verwendung der erfindungsgemäß beschichteten Partikeln nach den Patentansprüchen 10 bis 13.

Bevorzugte Ausgestaltungen der Erfindungen sind Gegenstand der Unteransprüche.

Die bevorzugten Ausführungsformen werden anhand von Abbildungen näher erläutert.
Dabei zeigen:
Fig. 1 eine schematische Schnittansicht eines Wirbelschichtreaktors und
Fig. 2 eine schematische Ansicht eines Sprühtrockners.

Der erste Aspekt der Erfindung betrifft das erfindungemäße Verfahren zur Aufbringung der Beschichtung des Pulvermaterials. Unter dem Begriff Pulvermaterial sind dabei sowohl die einzelnen Partikel oder Primärpartikel aus Kunststoff, Metall oder Keramik, als auch Aggregate oder Granulate, die insbesondere Bindephasen enthalten können, zu verstehen.

Die Beschichtung wird dabei im wesentlichen aus einem Klebemittel und gegebenenfalls weiteren Wirkstoffen gebildet.

Zu den erfindungsgemäß geeigneten Klebemitteln gehören in organischen Lösungsmitteln lösliche Polymere.
Zu den besonders geeigneten Polymeren gehören Poly(Meth)acrylate, Polyester, Polyolefine, Polyvinyle, Polystyrole, Polyvinylalkohole, Polyurethane, Wachse oder Phenolharze. Besonders bevorzugte Klebemittel sind Polyvinylpyrrolidone oder Polyvinylbutyrale.

Zu den als Pulvermaterial geeigneten Metallen gehören insbesondere die Metalle, Legierungen und intermetallische Phasen aus Elementen der Gruppe Al, Ti, Nb, Cr, Fe, Co, Ni, W, Mo, Zn, Cu, Ag, Au, Sn, Pt und/oder Ir

Zu den als Pulvermaterial geeigneten Keramiken gehören insbesondere die Oxide, Carbide und/oder Nitride aus mindestens einem Element der Gruppe B, Al, Si, Al, Ti, Zr, Mg, und/oder Ca.

Die Beschichtung des Pulvermaterials erfolgt erfindungsgemäß aus der Gasphase, insbesondere durch Auftragung von in einem Lösungsmittel flüssig gelösten oder suspendierten Beschichtungsmaterial aus der Gasphase. Wird das Beschichtungsmaterial in flüssiger Form auf das Pulvermaterial aufgetragen, so erfolgt die Verdampfung des Lösungsmittels bevorzugt noch in derselben Prozessstufe. Das Beschichtungsmaterial oder Beschichtungslösung enthält das Klebemittel entsprechend in gelöster oder kolloidaler Form.

Zu den geeigneten Verfahren zur Auftragung von flüssigen Beschichtungsmaterialien aus der Gasphase zählen insbesondere die Beschichtung in einem Wirbelschichtreaktor oder einem Sprühtrockner.

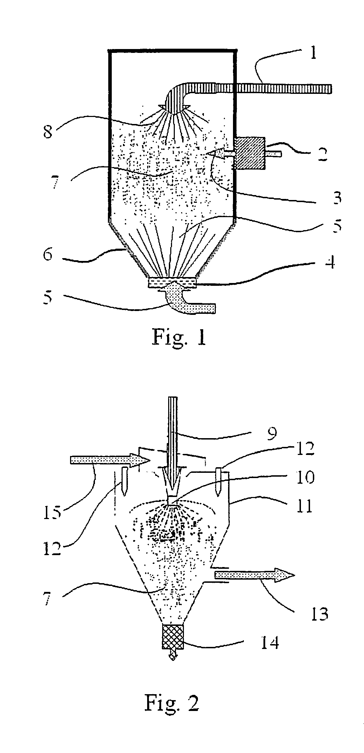

Beim Wirbelschichtreaktor (Fig. 1) wir das Pulvermaterial (7) von unten oder von oben in den Reaktor (6) zugeführt und durch einen von unten kommenden Luftstrom (5) in der Schwebe, beziehungsweise in der Gasphase gehalten. Das Entweichen der Partikel während der Beschichtung wird mittels einer porösen Membran (4) verhindert. Die Beschichtungslösung wird mittels Zerstäuberdüsen (1) in den Reaktor eingebracht und in einen Nebel aus Tröpfchen (8) zerstäubt. Bevorzugt erfolgt die Zufuhr des Klebemittels durch Einsprühen oder Verdüsen in Lösung oder kolloidaler Lösung als Bestandteil der Beschichtungslösung. Auch die Zufuhr weiterer, insbesondere fester, Wirkstoffe der Beschichtung erfolgt bevorzugt über das Einsprühen oder Verdüsen von geeigneten Suspensionen oder kolloidalen Lösungen. Ebenso können feste Wirkstoffe aber auch in der gleichen Weise wie das Pulvermaterial zudosiert werden.

Die Partikel des fluidisierten Pulvermaterials (7), sowie gegebenenfalls zugesetzte feste Wirkstoffe werden einzeln durch die Tröpfchen benetzt. Durch Zufuhr einer geeigneten Wärmemenge, beispielsweise durch einen vorgeheizten Luftstrom, durch Heizeinrichtungen in der Wand des Reaktors (6), oder durch Heizstrahler, wird das Lösungsmittel der Beschichtungslösung verdampft und die Beschichtung auf den Partikeln verfestigt.

Die Abtrennung der beschichteten Partikel erfolgt in bekannter Weise. Dies kann kontinuierlich während der Beschichtung oder auch diskontinuierlich im Batch-Betrieb erfolgen.
Das Wirbelschichtverfahren wird bevorzugt eingesetzt, um Granulate aus Primärpartikeln aufzubauen.

Im Falle des Sprühtrockners (Fig. 2) wird das Pulvermaterial üblicherweise als Suspension zusammen mit dem gelösten Klebemittel in den Sprühtrockner eingedüst, beziehungsweise mittels einer Zerstäuberdüse (10) zerstäubt. Das Gas wird von oben durch eine Zuleitung (15) zugeführt und verlässt nach der Trocknung den Sprühtrockner durch eine Ableitung (13). Die Wände des Sprühtrockners (11) werden beheizt, um die Trocknung des Pulvermaterials (7) beziehungsweise der beschichteten Partikel zu bewirken. Zusätzliche feste Wirkstoffe können als Komponente der Beschichtungslösung oder über eine separate Zuführung eingespeist werden. Das beschichtete Pulver wird in einer Abscheidevorrichtung (14) abgetrennt. Bevorzugt ist diese Abscheidevorrichtung als Zyklonabscheider ausgebildet, wobei das Gas dann überwiegend im Abscheider (14) und nicht mehr in einer Ableitung (13) austritt.

Aufgrund der gegenseitigen Reibung der Pulverpartikel und/oder der beschichteten Partikel findet zwangsläufig eine elektrostatische Aufladung statt. Dies gilt auch für die metallischen Partikel, sobald sie mit einem nichtleitenden Klebemittel oder Kleber beschichtet worden sind. Diese Aufladung wird durch die gegenseitige Reibung der Materialien aneinander zwangsläufig erzeugt. Diese Aufladung führt zu der unerwünschten Agglomeration der Primärpartikel und/oder der beschichteten Partikel.

Erfindungsgemäß ist daher vorgesehen, die elektrostatische Aufladung des Pulvermaterials und/oder des beschichteten Pulvermaterials (im folgenden zusammenfassend auch als Partikel bezeichnet) durch ionisierte Teilchen zu verringern. Hierzu werden die Partikel, beziehungsweise der Gasraum in dem die Partikel fluidisiert vorliegen, einem Strom ionisierter Teilchen ausgesetzt.

Dies kann beispielsweise durch die Zudosierung ionisierter Luft erfolgen. In Fig. 1 ist schematisch eine Ionisiervorrichtung (2) dargestellt, die die Luft einer Luftzuführung (3) ionisiert. Die Ionisierungsdüse am Ende der Luftzuführung (2) weist dabei bevorzugt einen Einblasquerschnitt im Bereich von wenigen mm bis einige cm auf. Die Luft wird mit leichtem Überdruck eingeblasen.

In einer weiteren Ausgestaltung der Erfindung kann in der Beschichtungsvorrichtung eine Entladeelektrode vorgesehen werden, die in der sie umgebenden Luft Ionen erzeugt.
Bevorzugte Ausführungsformen dieser Ionisierungsvorrichtung sind an zwei gegenüberliegenden Wandungen des Trockners angebrachte Elektroden, oder eine Ringelektrode, wodurch eine großflächige und gleichmäßige Ionisierung erzeugt werden kann.

Eine mögliche Anordnung ist in Abbildung Fig. 2 für einen Sprühtrockner ausgeführt. Die Entladeelektroden sind als Ringelektroden (12) ausgebildet, die rundum in den Sprühtrockner (11) hineinragen. Die Elektroden werden mit Wechselspannung betrieben.

In einer weiteren Ausgestaltung der Erfindung werden durch Teile der Wandungen Kondensatorplatten gebildet, die ein elektrisches Feld erzeugen. Das elektrische Feld muss nicht konstant gehalten werden, sondern kann auch als Wechselfeld ausgestaltet sein.

Das Potential der Entladeelektrode oder der Kondensatorplatten liegt bevorzugt im Bereich von 10 bis -10 kV.

In weiteren bevorzugten Ausgestaltung der Erfindung wird in die Beschichtungsvorrichtung ausschließlich getrocknete Luft zugeführt. Bevorzugt liegt die relative Luftfeuchtigkeit unterhalb 7% bezogen auf die Prozesstemperatur der Beschichtungsvorrichtung. Hierdurch wird die Agglomeration einer durch Wasser ausgelösten Verklebung der beschichteten Partikel ganz erheblich verringert. Obwohl als Klebemittel oder Kleber organische- oder metallorganische polymere Verbindungen mit geringer Hydrophilie bevorzugt werden, besitzen auch diese im allgemeinen eine Restlöslichkeit in Wasser. Durch eine zu hohe Luftfeuchtigkeit wird während des Beschichtungsprozesses, insbesondere wenn das Lösungsmittel der Beschichtung noch nicht vollständig verdampft ist, eine Wasseraufnahme stattfinden, die zu einer klebrigen Oberfläche führt.

Durch die Verwendung von getrockneter Luft wird es darüber hinaus auch möglich wasserhaltige Lösungsmittel für die Beschichtungslösung und/oder die Suspension der festen Wirkstoffe zu verwenden, da die Luftfeuchtigkeit auch nach der Verdampfung des Wassers aus der Beschichtung noch niedrig liegt.

In einer weiteren bevorzugten Ausführungsform wird als Prozessgas nicht Luft sondern ein Inertgas, wie beispielsweise Stickstoff oder Argon verwendet. Dies hat den Vorteil, dass die technisch verfügbaren Inertgase bereits einen sehr geringen Wassergehalt aufweisen und dass in der Beschichtungsvorrichtung keine entzündlichen oder explosiven Gasgemische entstehen können. Dies ist insbesondere im Zusammenhang mit den Ionisierungsvorrichtungen zu sehen.

Je nach Verweilzeit des Pulvermaterials in der Beschichtungsvorrichtung können die Pulverpartikel einzeln beschichtet werden, oder mittels Beschichtungsmaterial als Binderphase zu Granulaten aufgebaut werden. Die Schichtdicke des aufgetragenen Beschichtungsmaterials lässt sich beispielsweise über die Konzentration in der eingesprühten Lösung, die Verweilzeit und die Temperatur in der Beschichtungsvorrichtung einstellen.

Durch diese Verfahren können sowohl beschichtete Primärpartikel, als auch beschichtete Granulate erzeugt werden. Insbesondere ist es auch möglich mit Beschichtungsmaterial gebundene Granulate aus Partikeln des Pulvermaterials und der festen Wirkstoffe zu erhalten.

Ein weiterer Aspekt der Erfindung betrifft das Beschichtungsmaterial selbst. In einer ersten Ausgestaltung der Erfindung enthält das Beschichtungsmaterial als Klebemittel einen Kleber, der durch eine geeignete Bindeflüssigkeit zumindest zum Teil angelöst oder zur Quellung gebracht werden kann, so dass benachbarte Partikel des Pulvermaterials miteinander verkleben können. Diese Partikel werden bevorzugt im 3D-Binderdruck verwendet. Zu den erfindungsgemäß geeigneten Klebern zählen insbesondere organische- oder metallorganische polymere Verbindungen mit geringer Hydrophilie. Bevorzugt handelt es sich um polare Gruppen enthaltende Polymere mit geringer Wasserlöslichkeit, die in organischen Lösungsmitteln, wie beispielsweise Alkoholen, Ketonen oder Polyethern löslich sind. Insbesondere hinsichtlich der Einstellung der gewünschten Löslichkeiten, kann die Verwendung von Polymerblends von Vorteil sein. Zu den erfindungsgemäß geeigneten Polymeren gehören unter anderem Poly(meth)acrylate, Polyvinylalkohole, Polyvinylacetate, oder Polyvinylpyrrolidone. In einer besonders bevorzugten Ausführung der Erfindung wird als Kleber ein Polyvinylbutyral oder Mischungen hieraus verwendet.

Die erfindungsgemäß geeigneten Lösungsmittel des Klebers werden im wesentlichen durch organische Lösungsmittel oder deren Mischungen gebildet. Dabei handelt es sich bevorzugt um polare Lösungsmittel, wobei deren Mischungen bevorzugt einen Wassergehalt unterhalb 10 Gew% aufweisen. Besonders bevorzugt liegt der Wassergehalt unter 2 % des Lösungsmittels. Die chemische Zusammensetzung der Lösungsmittel ist so gewählt, dass die polymeren Produkte der Beschichtung in ihr gut löslich sind. Zu den bevorzugten Lösungsmitteln gehören C2- bis C7-Alkohole, insbesondere Ethylalkohol, (iso)Propanol oder n-Butanol, C3- bis C8-Ketone, wie beispielsweise Aceton oder Ethyl-Methyl-Keton, cyclische Ether, wie Tetrahydrofuran, oder Polyether, wie Methoxyethanol, Dimethoxydiethylenglykol oder Dimethoxytriethylenglykol.

Im Falle der Verwendung von wachsartigen Klebern sind niedermolekulare aliphatische Kohlenwasserstoffe, insbesondere cyclische oder lineare C6 bis C8 Aliphaten bevorzugt.

Unter den metallorganischen Polymeren sind insbesondere Polysilane, Polycarbosilane oder Polysilazane von Bedeutung.

In einer weiteren Ausführung wird das Klebemittel durch schmelzbare oder sinterfähige Polymere gebildet, wobei die Schmelz- und/oder Sintertemperatur bevorzugt im Temperaturintervall von 50 bis 180°C liegt. Werden Kunststoffe als Pulvermaterial eingesetzt, so ist darauf zu achten, dass die Schmelz- oder Sintertemperatur der Klebemittel unterhalb der entsprechenden Temperaturen des Pulvermaterials liegt. Der Temperaturunterschied sollte mindestens 20°C betragen. Besonders bevorzugt werden hier als Klebemittel Thermoplaste, wie PMMA oder PE eingesetzt.

Die Dicke der den Kleber enthaltenden Beschichtung liegt dabei bevorzugt im Bereich von 0,1 bis 10% des mittleren Durchmessers des Pulvermaterials. Typischerweise liegt die Dicke der Kleberschicht bei 50 nm bis 5 µm. Die bevorzugte Menge an Kleber liegt im Bereich von 0,3 bis 8 Gew% des jeweils beschichteten Pulvermaterials.

In einer bevorzugten Ausgestaltung der Erfindung wird das Pulvermaterial durch Granulate gebildet deren Bindephase zum überwiegenden Teil aus dem Klebemittel besteht.

In einer weiteren Ausgestaltung der Erfindung sind die Klebemittel aus im wesentlichen unpolaren Polymeren, beispielsweise Wachsen aufgebaut. Diese Kleber sind insbesondere für metallisches Pulvermaterial geeignet. Diese Klebemittel können sowohl durch Binderflüssigkeit als auch durch Lasersintern aktiviert werden.

Durch die erfindungsgemäß bevorzugten Klebemittel wird auf der Oberfläche des Pulvermaterials eine wasserunlösliche bis hydrophobe Schicht gebildet, die nicht mehr zur Aufnahme von Wasser aus der Umgebung, insbesondere der Luftfeuchtigkeit neigt. Dies hat den Vorteil, dass die beschichteten Partikel eine hohe Lagerfähigkeit und ein ausgezeichnetes Handling aufweisen. Ein weiterer Vorteil liegt in der Verbesserung der Abbildeschärfe des Binderdrucks. Da die einzelnen beschichteten Partikel nicht mehr unter dem Einfluss von Luftfeuchtigkeit zur Verklebung neigen, werden keine sekundären Agglomerate gebildet.

Die minimale Dicke einer im 3D-Binderdruckverfahren ausbringbaren Materialschicht liegt daher beim Durchmesser der Partikel des Pulvermaterials und nicht beim Durchmesser gegebenenfalls hieraus gebildeter sekundärer Agglomerate.

In einer weiteren vorteilhaften Ausgestaltung der Erfindung sind in der Beschichtung feste Wirkstoffe enthalten. Bevorzugt werden die festen Wirkstoffe durch Feinkornmaterial aus sinterfähigen und/oder glasbildenden Mikropartikeln gebildet. Dabei ist zwischen dem Pulvermaterial aus einzelnen Partikeln eines Pulvers oder auch durch Agglomeration gebildete Aggregaten, insbesondere Granulate, die durch nichtpulvrige Bindephasen durchsetzt sein können und dem Feinkornmaterial zu unterscheiden. Das Feinkornmaterial besteht aus einzelnen Partikeln, deren Abmessungen deutlich unterhalb den Abmessungen des Pulvermaterials liegt. Die mittleren Partikelgrößen des Feinkornmaterials liegen typischerweise unterhalb 30 % der Partikelgröße des Pulvermaterials und bevorzugt im Bereich von 0,3 bis 5 %. Besonders bevorzugt besteht das Feinkornmaterial aus Submikron- oder Nanopartikeln. Das Feinkornmaterial liegt dabei zumindest zum Teil innerhalb der durch das Klebemittel gebildeten Beschichtung. Auch aus der Beschichtung herausragende Partikel sind bevorzugt von Klebemittel bedeckt.

In einer weiteren Ausgestaltung der Erfindung enthält die Beschichtung eines Pulvermaterials aus Metall oder Keramik sinterfähiges und/oder glasbildendes Feinkornmaterial, das geeignet ist bei einer späteren Temperaturbehandlung des durch das 3D-Binderdruckverfahren gebildeten Körpers (oder Grünkörpers) eine feste Sinter- oder Glasphase auszubilden. Die erfindungsgemäße Anordnung der Feinkornpartikel auf der Oberfläche der einzelnen Pulverpartikel führt dazu, dass bei der Temperaturbehandlung des Grünkörpers Sinter- oder Glasbrücken zwischen benachbarten Pulverpartikeln ausgebildet werden. Dadurch findet eine Verfestigung des Grünkörpers, beziehungsweise die Ausbildung eines festen Sinterkörpers statt. Die hierbei stattfindende Schwindung ist minimal, da sie auf die kleinen Feinkornpartikel begrenzt ist. Wird diese Temperaturbehandlung unterhalb der Glasbildungs- oder Sintertemperatur des Pulvermaterials ausgeführt, so tritt nahezu keine Sinterschwindung des gesamten Körpers oder Grünkörpers auf.

Bevorzugt werden daher Pulvermaterial und Feinkornmaterial so ausgewählt, dass die Feinkornpartikel eine geringere Sinter- oder Glasbildungstemperatur aufweisen als das Pulvermaterial. Bevorzugt liegt dieser Temperaturunterschied oberhalb 30°C und besonders bevorzugt oberhalb 100°C.

Grundsätzlich gilt bei artgleichem Material, dass die kleineren Partikel aufgrund ihrer höheren Oberflächenenergie eine geringere Sintertemperatur bzw. Glasbildungstemperatur aufweisen als die größeren. Dieser Effekt ist insbesondere bei den bevorzugten Feinkornpartikeln im Submikrometer- oder Nanobereich sehr deutlich. Daher umfassen die erfindungsgemäß bevorzugten Materialkombinationen sowohl unterschiedliche wie gleiche chemische Verbindungen.

Bei dem Feinkornmaterial kann es sich ebenso wie bei dem Pulvermaterial um Keramik, Metalle oder Keramik handeln, wobei chemisch kompatible Materialien (insbesondere chemisch eng verwandte) bevorzugt werden. Typischerweise umfasst das Material der Feinkornpartikel die für das jeweilige Pulvermaterial üblichen Sinterhilfsmittel. Besonders bevorzugt sind SiO₂, Silikate, Borsilikate oder Alumosilikate, insbesondere in Verbindung mit Pulvermaterial aus Oxidkeramik.
In einer besonders bevorzugten Ausgestaltung der Erfindung wird das Pulvermaterial im wesentlichen aus ZrSiO₄, ZrO₂, und/oder Al₂O₃ und das Feinkornmaterial aus SiO₂, insbesondere SiO₂-Nanopulver, gebildet.
In einer weiteren bevorzugten Ausgestaltung werden Pulvermaterial und Feinkornmaterial im wesentlichen durch SiC gebildet. In diesem Fall sind Kleber auf der Basis von siliziumorganischen Polymeren bevorzugt.

Im Falle von metallischem Pulvermaterial wird das Feinkornmaterial bevorzugt aus Metallen oder Legierungen der Elemente Cu, Sn, Zn, Al, Bi, Fe und/oder Pb gebildet. Für metallisches Pulvermaterial sind als Feinkornmaterial ebenso auch Metallsalze geeignet, die sich thermisch zu den entsprechenden Metallen zersetzen lassen.

Ein weiterer Aspekt der Erfindung betrifft ein Verfahren zur Herstellung eines Körpers aus dem erfindungsgemäß beschichteten Pulvermaterial. Das Pulvermaterial wird hierbei zunächst als dünne Pulverschicht ausgebracht. Hierbei können die bei der Binderdrucktechnik üblichen Verfahren angewendet werden. Durch die geringe Wasseraufnahme der erfindungsgemäß beschichteten Pulver treten bei diesem Verfahrensschritt deutliche Vorteile hinsichtlich Gleichmäßigkeit der Pulverschicht und beim Pulverhandling auf.

Durch die erfindungsgemäße Beschichtung lassen sich auch unter Zutritt von Luftfeuchtigkeit Pulverschichten mit wenigen Partikellagen, je nach Ausgangspulver sogar nur aus einer einzigen Partikel-Monolage aufbringen. So sind mit den erfindungsgemäß beschichteten Pulvermaterialien minimale Schichtdicken von unter 40 µm, je nach Ausgangspartikeln auch unter 15 µm möglich.

Im darauffolgenden Verfahrensschritt wird die Pulverschicht in definierten Bereichen durch Aktivierung des Klebemittels ausgehärtet.

Im Falle des 3D-Binderdruckverfahrens wird die Binderflüssigkeit im wesentlichen durch organische Lösungsmittel oder deren Mischungen gebildet. Dabei werden bevorzugt die als Lösungsmittel für das Beschichtungsmaterial geeigneten Stoffe eingesetzt. Der Wassergehalt liegt erfindungsgemäß unterhalb 45 Gew% und besonders bevorzugt unterhalb 5 Gew%. Die chemische Zusammensetzung der Binderflüssigkeit ist so gewählt, dass die polymeren Produkte der Beschichtung in ihr löslich oder zumindest quellfähig sind. Besonders bevorzugt werden niedere Alkohole, wie Ethylalkohol, (iso)Propanol oder n-Butanol, Aceton oder Ethyl-Methyl-Keton, oder Tetrahydrofuran. Gegebenenfalls können Hilfsstoffe, die Flüchtigkeit und Benetzung beeinflussen zugesetzt werden. Hierzu gehören unter anderem Tenside, mehrwertige Alkohole, wie Ethylenglykol, Glycerin oder niedermolekulare Carbonsäuren. Im Falle der Verwendung von Klebern auf Wachsbasis sind insbesondere cyclische oder lineare C6 bis C8 Aliphaten bevorzugt.

Die Binderflüssigkeit ist bevorzugt nahezu frei von festen oder unlöslichen Bestandteilen. Typischerweise liegt deren Gehalt nicht über 5 Gew%. Der geringe Gehalt bzw. das vollständige Fehlen von Feststoffen in der Binderflüssigkeit zeigt für die Zuverlässigkeit und Haltbarkeit der Bindemitteldüsen deutliche Vorteile. Abrasion und Verstopfung der Druckköpfe treten mit den erfindungsgemäßen Binderflüssigkeiten im Prinzip nicht mehr auf.

Erfindungsgemäß ist die Menge an Binderflüssigkeit so gewählt, dass sie für die Auflösung des gesamten in der Beschichtung gebundenen Klebers nicht ausreicht. Insbesondere werden auch die Bindephasen gegebenenfalls eingesetzter Granulate nicht aufgelöst. Vielmehr ist die Menge der Binderflüssigkeit so dosiert, dass sie nur zum Auf- oder Anlösen an den Berührungspunkten, beziehungsweise -flächen, benachbarter Partikel ausreicht. Die Anreicherung der Binderflüssigkeiten in diesen Kontaktzonen wird durch die Kapillarwirkungen unterstützt.

Bevorzugt liegt die zur Befeuchtung des Pulvers verwendete Menge an Binderflüssigkeit im Bereich von 5 bis 70 Vol% des zu beschichtenden Pulvervolumens. Besonders bevorzugt liegt die Menge an Binderflüssigkeit beim 5 bis 25-fachen Volumen des in der Beschichtung vorhandenen Klebers.

Durch die darauffolgende Verdunstung kann der Kleber seine Wirkung entfalten. Dabei erweist sich die Verwendung der organischen Lösungsmittel gegenüber den bekannten wässrigen Binderflüssigkeiten als weiterer Vorteil. Aufgrund des höheren Dampfdruckes der organischen Lösungsmittel trocknen die befeuchteten Stellen wesentlich schneller aus als dies bei herkömmlichen Systemen der Fall ist. Dies wirkt sich positiv auf die Abbildeschärfe und die Prozessgeschwindigkeit aus.

Die Prozessschritte Aufbringen des Pulvermaterials und Befeuchtung werden in bekannter Weise zum Aufbau eines 3D-Körpers wiederholt. Aufgrund der minimalen Quell- und Schwindungsvorgänge können auch vergleichsweise große Körper nahezu spannungsfrei hergestellt werden. Durch das erfindungsgemäß beschichtete Pulvermaterial und den erfindungsgemäßen Prozess lässt sich die lineare Materialschwindung unter 2 % der entsprechend besprühten Fläche senken.

Ein weiterer Aspekt der Erfindung betrifft die Herstellung von Sinterkörpern aus keramik- oder metall-haltigen Pulvermischungen. Dabei wird von den über das dargestellte 3D-Binderdruckverfahren unter Verwendung der erfindungsgemäßen beschichteten Pulverpartikel erhältlichen Grünkörpern ausgegangen. Die Grünköper können in bekannter Weise zu poröser oder auch dichter Keramik oder Metallen gesintert werden. Eine oder mehrere Nachverdichtungen der zunächst porösen Grün- oder Sinterkörper kann hier von Vorteil sein.

Enthält die Beschichtung Feinkornmaterial, so werden die Grünkörper bevorzugt bei einer Temperatur unterhalb der Sinter- oder Glastemperatur des Pulvermaterials und oberhalb derjenigen des in der Beschichtung enthaltenen Feinkornmaterials gebrannt. Unter der Sintertemperatur ist hier die Temperatur des mittleren Sinterstadiums zu verstehen, bei der die Ausbildung eines zusammenhängenden Porenraums erfolgt, die Erkennbarkeit der einzelnen Teilchen verloren geht und die Sinterschwindung beginnt. Bevorzugt liegt die Brenntemperatur der Grünkörper mindestens 30°C unterhalb der Sinter- oder Glasbildungstemperatur des Pulvermaterials. Hierdurch beschränkt sich die durch Sinterung und/oder Glasbildung hervorgerufene Schwindung im wesentlichen auf das Feinkornmaterial. Die hierdurch hervorgerufenen Volumeneffekte sind minimal, gegenüber dem Gesamtvolumen des Grün- oder Sinterkörpers. Daher können feste Sinterkörper erzeugt werden, die gegenüber den im 3D-Binderdruckverfahren vorgegebenen Abmessungen eine lineare Schwindung von maximal 2 % aufweisen.

Eine erfindungsgemäß bevorzugte Anwendung der mittels Keramik-Pulvermaterial gewonnenen Grünkörper oder Sinterkörper liegt in der Gießereitechnik und dem Formenbau. So eignen sich beispielsweise durch SiO₂-Feinkornmaterial gebundene Al₂O₃-, oder ZrSiO₄-Keramik als Formen oder Einlegeteile beim Feinguss von Metallen.

Eine bevorzugte Anwendung der mittels Kunststoff-Pulvermaterial gewonnenen Körper liegt bei der Herstellung von Formkernen für den Aufbau von Gussformen. Durch Besandung oder Beschlickerung können aus den Kunststoffkörpern beispielsweise Gusshohlformen für den Metallguss erzeugt werden.

Die porösen metallischen Körper eignen sich beispielsweise für Anwendungen in Wärmetauschern oder Katalysatoren. Durch Nachsintern oder geeignete Nachverdichtung können Kleinst- und Mikrobauteile für unterschiedlichste feinmechanische Anwendungen gefertigt werden.

## Patentansprüche

1. Verfahren zur Beschichtung von Pulvermaterial aus Kunststoff, Metall und/oder Keramik, wobei die Beschichtung ein Klebemittel enthält, das durch eine Binderflüssigkeit oder durch Laserlicht aktivierbar ist,
**dadurch gekennzeichnet,**
**dass** das Klebemittel aus einer Lösung auf die Partikel des Pulvermaterials abgeschieden wird,
wobei die zu beschichtenden Partikel in einer Gasphase fluidisiert vorliegen und
wobei zumindest die Partikel und/oder die beschichteten Partikel ionisierten Teilchen ausgesetzt werden.

2. Verfahren nach Anspruch 1
**dadurch gekennzeichnet,**
**dass** zumindest die mit den beschichteten Partikeln in Kontakt kommende Gasphase im wesentlichen wasserfrei ist.

3. Verfahren nach Anspruch 1 oder 2
**dadurch gekennzeichnet,**
**dass** zusätzlich zum Klebemittel weitere Wirkstoffe auf die Oberfläche des Pulvermaterials abgeschieden werden.

4. Verfahren nach Anspruch 3
**dadurch gekennzeichnet,**
**dass** die Wirkstoffe polymere, metallische oder keramische Nanopartikel und/oder Mikropartikel mit einer mittleren Korngröße unterhalb 5 µm umfassen.

5. Verfahren nach einem der vorangegangenen Ansprüche,
**dadurch gekennzeichnet,**
**dass** während der Beschichtung Granulate gebildet werden, die das Klebemittel als Bindephase beinhalten.

6. Verfahren nach einem der vorangegangenen Ansprüche,
**dadurch gekennzeichnet,**
**dass** die Schichtdicke der den Kleber enthaltenden Beschichtung im Bereich von 40 nm bis 5 µm liegt.

7. Verfahren nach einem der vorangegangenen Ansprüche,
**dadurch gekennzeichnet,**
**dass** die Menge der Beschichtung bei 0,3 bis 8 Gew% des Pulvermaterials liegt.

8. Verfahren nach einem der vorangegangenen Ansprüche,
**dadurch gekennzeichnet,**
**dass** das Klebemittel aus einem Kleber aus organischen und/oder metallorganischen Polymeren mit geringer Wasserlöslichkeit aufgebaut ist.

9. Verfahren nach Anspruch 8,
**dadurch gekennzeichnet,**
**dass** der Wassergehalt der Lösung des Klebers unterhalb 5% liegt.

10. Verfahren nach einem der vorangegangenen Ansprüche,
wobei die beschichteten Partikeln zur Herstellung eines Körpers verwendet werden,
umfassend die mehrfache Abfolge der Schritte:
Ausbringen einer Pulverschicht aus beschichteten Partikeln auf einer Unterlage,
Befeuchten definierter Bereiche der Pulverschicht mit einer Binderflüssigkeit,
**dadurch gekennzeichnet,**
**dass** mindestens eine der Pulverschichten eine Dicke unterhalb 250 µm aufweist,
und die Binderflüssigkeit im Wesentlichen durch organische Lösungsmittel gebildet wird und einen Wassergehalt unterhalb 45 % aufweist.

11. Verfahren nach Anspruch 10,
**dadurch gekennzeichnet,**
**dass** der Anteil unlöslicher Bestandteile in der Binderflüssigkeit unterhalb 5 Gew% liegt.

12. Verfahren nach Anspruch 10,
**dadurch gekennzeichnet,**
**dass** die zur Befeuchtung des Pulvers verwendete Menge an Binderflüssigkeit im Bereich von 5 bis 70 Vol% des zu beschichtenden Pulvervolumens liegt.

13. Verfahren nach einem der Ansprüche 1 bis 9,
wobei die beschichteten Partikeln zur Herstellung eines Körpers verwendet werden,
umfassend die mehrfache Abfolge der Schritte:
Ausbringen einer Pulverschicht aus beschichteten Partikeln auf einer Unterlage,
Aufschmelzen oder Versintern des Klebemittels zumindest der ausgebrachten Pulverschicht durch die Laserbestrahlung,
**dadurch gekennzeichnet,**
**dass** die Energie des Laserlichtes im Wesentlichen nicht zum Aufschmelzen oder Sintern der Pulverpartikel der Pulverschicht ausreicht.

14. Verfahren nach einem der Ansprüche 10 bis 13, wobei die damit hergestellten Körper für die Herstellung von Sinterkörpern verwendet werden.

15. Verfahren nach Anspruch 14, wobei der damit hergestellte Sinterkörper in der Gießereitechnik, im Formenbau oder im Werkzeugbau verwendet wird.

## Claims

1. Method for coating powder material of plastic, metal and/or ceramic, the coating containing an adhesive which can be activated by a binder liquid or by laser light, **characterized in that** the adhesive is deposited from a solution onto the particles of the powder material, the particles to be coated being present in fluidized form in a gas phase and at least the particles and/or the coated particles being exposed to ionized particles.

2. Method according to Claim 1, **characterized in that** at least the gas phase coming into contact with the coated particles is substantially water-free.

3. Method according to Claim 1 or 2, **characterized in that**, in addition to the adhesive, further active substances are deposited onto the surface of the powder material.

4. Method according to Claim 3, **characterized in that** the active substances comprise polymeric, metallic or ceramic nanoparticles and/or microparticles with an average grain size below 5 µm.

5. Method according to one of the preceding claims, **characterized in that** granules which comprise the adhesive as a binding phase are formed during the coating.

6. Method according to one of the preceding claims, **characterized in that** the layer thickness of the coating containing the adhesive lies in the range from 40 nm to 5 µm.

7. Method according to one of the preceding claims, **characterized in that** the amount of the coating lies at 0.3 to 8% by weight of the powder material.

8. Method according to one of the preceding claims, **characterized in that** the adhesive is composed of an adhesive of organic and/or organo-metallic polymers with low water solubility.

9. Method according to Claim 8, **characterized in that** the water content of the solution of the adhesive lies below 5%.

10. Method according to one of the preceding claims, the coated particles being used for producing a body, comprising the repeated sequence of the steps of:
- discharging a layer of powder of coated particles on an underlying surface,
- moistening defined regions of the layer of powder with a binder liquid,
**characterized**
- **in that** one of the layers of powder has a thickness below 250 µm,
- and the binder liquid is substantially formed by organic solvents and has a water content below 45%.

11. Method according to Claim 10, **characterized in that** the proportion of insoluble constituents in the binder liquid lies below 5% by weight.

12. Method according to Claim 10, **characterized in that** the amount of binder liquid used for moistening the powder lies in the range from 5 to 70% by volume of the powder volume to be coated.

13. Method according to one of Claims 1 to 9, the coated particles being used for producing a body, comprising the repeated sequence of the steps of:
- discharging a layer of powder of coated particles on an underlying surface,
- melting or sintering the adhesive, at least of the discharged layer of powder, by laser irradiation,
**characterized**
- **in that** the energy of the laser light is substantially insufficient to melt or sinter the powder particles of the layer of powder.

14. Method according to one of Claims 10 to 13, the bodies produced with it being used for the production of sintered bodies.

15. Method according to Claim 14, the sintered body produced with it being used in foundry practice, in mould making or in tool making.

## Revendications

1. Procédé d'application d'un matériau poudreux en matière synthétique, en métal ou en céramique, le revêtement contenant un adhésif qui peut être activé par un liquide de liant ou par la lumière laser,
**caractérisé en ce que** l'adhésif est déposé sous la forme d'une solution sur les particules du matériau poudreux,
les particules à revêtir étant fluidisées dans une phase gazeuse et
au moins les particules et/ou les particules revêtues sont exposées à des particules ionisées.

2. Procédé selon la revendication 1, **caractérisé en ce qu'**au moins la phase gazeuse qui entre en contact avec les particules revêtues est essentiellement exempte d'eau.

3. Procédé selon la revendication 1 ou 2, **caractérisé en ce qu'**en plus de l'adhésif, d'autres substances actives sont déposées à la surface du matériau poudreux.

4. Procédé selon la revendication 3, **caractérisé en ce que** les substances actives comprennent des nanoparticules et/ou des microparticules polymères, métalliques ou céramiques en grains d'une taille moyenne inférieure à 5 µm.

5. Procédé selon l'une quelconque des revendications précédentes, **caractérisé en ce que** des granulés qui contiennent l'adhésif comme phase de liant sont formés pendant le revêtement.

6. Procédé selon l'une quelconque des revendications précédentes **caractérisé en ce que** l'épaisseur de la couche du revêtement qui contient l'adhésif est comprise dans la plage de 40 nm à 5 µm.

7. Procédé selon l'une quelconque des revendications précédentes, **caractérisé en ce que** la quantité du revêtement représente de 0,3 à 8% en poids du matériau poudreux.

8. Procédé selon l'une quelconque des revendications précédentes, **caractérisé en ce que** le liant est constitué d'un adhésif en polymères organiques et/ou métallo-organiques à faible solubilité dans l'eau.

9. Procédé selon la revendication 8, **caractérisé en ce que** la teneur en eau de la solution d'adhésif est inférieure à 5%.

10. Procédé selon l'une quelconque des revendications précédentes, dans lequel les particules revêtues sont utilisées pour réaliser un corps, le procédé comprenant la succession répétée des étapes qui consistent à:
appliquer une couche de poudre constituée de particules revêtues sur une base,
humidifier des parties définies de la couche de poudre à l'aide d'un liquide de liant,
**caractérisé en ce que**
au moins l'une des couches de poudre a une épaisseur inférieure à 250 µm et le liquide de liant est formé essentiellement de solvants organiques et sa teneur en eau est inférieure à 45%.

11. Procédé selon la revendication 10, **caractérisé en ce que** la proportion de composants insolubles dans le liquide de liant est inférieure à 5% en poids.

12. Procédé selon la revendication 10, **caractérisé en ce que** la quantité de liquide de liant utilisée pour humidifier la poudre est comprise dans la plage de 5 à 70% en volume par rapport au volume de poudre à appliquer.

13. Procédé selon l'une quelconque des revendications 1 à 9, dans lequel les particules revêtues sont utilisées pour réaliser un corps, le procédé comprenant la succession répétée des étapes qui consistent à:
appliquer une couche de poudre en particules revêtues sur une base,
par irradiation au laser, faire fondre ou fritter le liant au moins de la couche de poudre appliquée,
**caractérisé en ce que** l'énergie de la lumière laser ne suffit essentiellement pas pour faire fondre ou fritter les particules de poudre de la couche de poudre.

14. Procédé selon l'une quelconque des revendications 10 à 13, dans lequel les corps ainsi réalisés sont utilisés pour la réalisation de corps frittés.

15. Procédé selon la revendication 14, dans lequel le corps fritté ainsi réalisé est utilisé en fonderie, en construction de moules ou en construction d'outils.
